# EUROPÄISCHE PATENTSCHRIFT

(11) **EP 0 808 684 B1**
(45) Veröffentlichungstag und Bekanntmachung des Hinweises auf die Patenterteilung: **16.07.2003**
(21) Anmeldenummer: 97107609.6
(22) Anmeldetag: 09.05.1997
(51) Int. Cl.: B23K 23/00

(54) **Giessform für eine Zwischengussverschweissung zweier Werkstücke**
Mould for the intermediate cast welding of two workpieces
Moule pour le soudage par coulée intermédiaire de deux pièces métalliques

(30) Priorität: 21.05.1996 DE 19620374
(43) Veröffentlichungstag der Anmeldung: 26.11.1997
(73) Patentinhaber: Elektro-Thermit GmbH & Co. KG, 45139 Essen (DE)
(72) Erfinder:
(74) Vertreter: Sobisch, Peter, Dipl.-Ing.

(56) Entgegenhaltungen:
- EP-A- 0 637 480
- FR-A- 1 545 836
- FR-A- 2 374 127

## Beschreibung

Die Erfindung bezieht sich auf ein Verfahren zur Herstellung einer Gießform entsprechend dem Oberbegriff des Anspruchs 1.

Zwischengußverschweißungen zwischen zwei Werkstücken sind beispielsweise in der Form der aluminothermischen Schweißverfahren bekannt und werden vorzugsweise zur Verschweißung zweier Schienen benutzt. Grundlage dieser Schweißverfahren ist die starke Affinität von Aluminium zu Sauerstoff, welche zur Reduktion von Eisenoxiden genutzt wird, wobei diese Reaktion stark exotherm ist und die zur Aufschmelzung der Reaktanden, im wesentlichen A1 und Fe₂O₃, erforderliche Wärme liefert. Die Reaktanden liegen als feinkörniges gleichmäßig verteiltes Gemisch vor, dem zur Dämpfung der Reaktion Stahlpartikel und gegebenenfalls Stahlbildner wie z.B. C, Mn, Cr, Mo usw. zugegeben werden. Dieses Reaktionsgemisch wird in einer definierten Menge in einen Reaktionstiegel oberhalb einer, die zu verschweißenden Schienenenden umgebenden Gießform eingebracht, wobei nach erfolgter Zündung des Gemisches beispielsweise mittels eines Zündstäbchens der Reduktionsvorgang eingeleitet wird, der zur Bildung eines schmelzflüssigen Schweißgutes, im wesentlichen aus Eisen und einer auf diesem aufschwimmenden, im wesentlichen aus Tonerde bestehenden Schlacke führt. Das Schweißgut wird anschließend in den, durch die Gießform und die Schienenenden begrenzten Gießraum zwecks Durchführung der Zwischengußverschweißung eingegossen.

Ein wesentlicher Vorteil dieses Schweißverfahrens besteht darin, daß es ohne Zufuhr äußerer Energie abläuft und kein großer apparativer Aufwand erforderlich ist.

Es ist bekannt, die Gießform aus Quarzsand unter Verwendung eines Bindemittels wie z.B. Wasserglas herzustellen, und zwar in der Form zweier, an das Schienenprofil angepaßter Formhälften, die den Bereich zwischen den zu verschweißenden Schienenenden seitlich umfassen, wobei der, durch die Stirnseiten der Schienenenden und die Formhälften umgebene Gießraum im übrigen durch einen feuerfesten Sand gegenüber dem Schienenprofil abgedichtet wird.

Das schmelzflüssige Schweißgut soll den Gießraum zur Erzielung eines fehlerfreien Zwischengußgefüges nach Maßgabe einer definierten Gießgeschwindigkeit bzw. Gießzeit ausfüllen, welche unter anderem durch die Wärmeabflußbedingungen, insbesondere Abkühlgeschwindigkeiten im Bereich der Wandungen der Gießform bestimmt wird. Die Abkühlgeschwindigkeiten werden unter anderem durch das Wärmeleitvermögen des Werkstoffs der Gießforrn, jedoch auch durch das Volumen des Gußkörpers sowie dessen Geometrie beeinflußt. In Abhängigkeit von örtlichen unterschiedlichen Abkühlgeschwindigkeiten und - hiermit zusammenhängend - örtlich unterschiedlichen Temperaturen vollzieht sich der Kristallisationsprozeß der Schmelze, wobei es unterhalb von Temperaturen von etwa 550° C bis 650° C, auch aufgrund örtlich unterschiedlichen Schwindungsverhaltens zur Ausbildung ausgeprägter Eigenspannungen kommen kann. Nachdem die hauptsächliche Belastung des Schienenprofils eine Biegeschwingbeanspruchung ist, welche insbesondere im Schienenfuß Zugspannungen zur Folge hat, kann durch diese Eigenspannungen die Belastbarkeit des Schienenprofils erheblich gemindert werden.

Hinsichtlich der Art des Einbringens des schmelzflüssigen Gußwerkstoffs in den Gießraum unterscheidet man den sogenannten fallenden Guß, bei welchem des Schmelzgut von oben frei in den Gießraum hineinfällt von dem steigenden Guß, bei welchem das Schmelzgut den Gießraum - im Bodenbereich beginnend und in Richtung auf das obere Ende hin fortschreitend - ausfüllt.

Zur Vermeidung von Lunkerbildung bzw. zum Ausgleich des, durch die Erstarrung bedingten Schwundmaßes ist der Gießform ein System von Steigern bzw.

Speisem zugeordnet, die sich seitlich neben der Schienenverbindung innerhalb der Wandung der Gießform erstrecken. In diesen Steigern findet der Erstarrungsprozeß des schmelzflüssigen Metalls seinen Abschluß und es wird das Volumen dieser Steiger in Abhängigkeit von dem Schwundmaß, der Erstarrungszeit und dem Erstarrungsverhalten des Gußkörpers bestimmt. Die Wirkung dieser Steiger besteht insgesamt darin, daß aus diesen neben Wärme auch schmelzflüssiges Metall in den Gießraum eingebracht wird.

Schließlich ist die Gießform mit einer Reihe von Luftkanälen versehen, über welche die Bildung von Hohlräumen bestehend aus Luft oder aus dem schmelzflüssigen Metall während des Erstarrungsprozesses entweichenden Gasen verhindert wird. Auch in diesen Luftkanälen findet wie bei den erwähnten Steigern der Erstarrungsprozeß seinen Abschluß.

Aus der EP 0 637 480 A1 sind mehrere Beispiele einer Gießform, unter anderem auch gattungsgemäße Gießformen bekannt, die sowohl mit Steigern als auch mit Luftkanälen versehen sind, und zwar in einer bezüglich einer vertikalen Längsmittelebene der Schienenenden symmetrischen Anordnung. Mit dieser Gießform soll u.a. ein erhöhtes Flächenträgheitsmoment des Profils der Schienenverbindung im Verbindungsbereich erreicht werden und es erstrecken sich demzufolge die Steiger beiderseits des Schienenverbindungsbereichs global vertikal, d.h. parallel zu der genannten Längsmittelebene, und zwar bis an eine Stelle unterhalb des Schienenfußes. Die Steiger weisen stets horizontale Verbindungskanäle zu dem Gießraum auf, dessen Luftkanäle im Schienenfußbereich an einer, der genannten Längsmittelebene unmittelbar benachbarten Stelle angesetzt sind. Die Steiger weisen - in ihrer Längsrichtung gesehen - aufeinander folgend Bereiche unterschiedlicher Querschnitte auf und es ist diese Querschnittsverteilung in Verbindung mit der Anordnung sowie der Querschnittsbemessung der horizontalen Verbindungskanäle mit der Maßgabe angelegt, daß sich in einer Anfangsphase des Gußprozesses innerhalb des Gießraumes, hier des Schienenfußbereichs ein Schmelzbad von vorübergehend konstanter Tiefe ausbildet.

Es ist vor diesem Hintergrund die Aufgabe der Erfindung, ein gattungsgemäßes Verfahren mit Hinblick auf die Herstellung einer Gießform hin auszugestalten, welche durch möglichst gleichförmige Abkühlbedingungen und niedrige Abkühlgeschwindigkeiten gekennzeichnet ist, um zu einer Reduzierung der sich ansonsten ergebenden Eigenspannungen zu gelangen. Gelöst ist diese Aufgabe bei einem gattungsgemäßen Verfahren durch die Merkmale des Kennzeichnungsteils des Anspruchs 1.

Erfindungswesentlich ist hiemach, daß der Flächenschwerpunkt der Querschnittsfläche des wenigstens einen Steigers in Abhängigkeit von einem Wert y plaziert ist, welcher Wert den Abstand zu einer Seitenkante des Schienenfußes beschreibt. Erfindungswesentlich ist femer, daß die Querschnittsbemessung des Luftkanals/der Luftkanäle in Abhängigkeit von der Querschnittsbemessung des Steigers erfolgt. Die Querschnittsform der Steiger bzw. der Luftkanäle ist grundsätzlich beliebig, wobei der Querschnitt der Steiger durch die Funktion als Steiger während des Erstarrungsprozesses im wesentlichen festgelegt ist. Im allgemeinen wird auf jeder Seite des Schienenprofils ein Steiger vorgesehen sein - dies ist jedoch nicht zwingend. Es kann ein Luftkanal auf jeder Seite des Schienenprofils vorgesehen sein, es können jedoch auch zwei und mehr Luftkanäle auf jeder Seite vorgesehen sein. Wesentlich für die Plazierung der Luftkanäle - soweit die Symmetrieverhältnisse bezüglich der genannten Vertikalebenen gewahrt sind - ist, daß von dem sich sowohl in den Luftkanälen als auch in den Steigern befindlichen, zunächst schmelzflüssigen Metall eine Wärmespeicherwirkung ausgeht, welche auf die Abkühlverhältnisse des sich in der Schweißfuge befindlichen Schweißgutes einen vergleichmäßigenden Einfluß ausübt. Wesentlich für die Plazierung und Querschnittsgestaltung der Luftkanäle ist hiemach die von diesen ausgehende thermische Beeinflussung der Substanz der Wandungen der Gießform im Sinne einer Vergleichmäßigung und Verlangsamung des Abkühlprozesses des sich in der Schweißfuge befindlichen Schweißgutes. Dies bedingt neben einer Wärmespeicherung auch eine in Abhängigkeit von der Geometrie der Schweißfuge erfolgende räumliche Beeinflussung der sich in den Wandungen der Gießform ausbildenden Temperaturen. Überraschenderweise hat sich hierbei herausgestellt, daß innerhalb der erfindungsgemäßen Bereiche für die Plazierung des Steigers sowie die Bemessung der Luftkanäle eine bedeutende Verminderung der sich ausbildenden Eigenspannungen erreichbar ist.

Die Plazierung der Luftkanäle erfolgt erfindungsgemäß in Abhängigkeit von Parametern des Schweißwulstes wie der Wulstbreite W_{B} und dem Abstand des Flächenschwerpunktes der Querschnittsflächen der Luftkanäle von dem Scheitelpunkt des Schweißwulstes - in der Ebene des Schienenfußes gesehen.

Da erfindungsgemäß insbesondere eine räumliche Beeinflussung der Temperaturverhältnisse in den Wandungen der Gießform beabsichtigt ist, kommt dementsprechend der räumlichen Verteilung der Luftkanäle eine besondere Bedeutung zu. Indem diese in dem erfindungsgemäßen Bereich - unter Wahrung der eingangs dargelegten Symmetrieverhältnisse - plaziert werden, wird zu einer bedeutenden Vergleichmäßigung und Verlangsamung der Abkühlverhältnisse beigetragen.

Die Merkmale der Ansprüche 2 bis 10 sind auf eine weitere Präzisierung der für die Positionierung der Steiger und der Luftkanäle sowie für die Bemessung des Querschnitts der Luftkanäle maßgeblichen Parameter gerichtet. Die Querschnittsangaben und in gleicher Weise die Positionsangaben beziehen sich jeweils auf die Durchstoßbereiche der Steiger sowie der Luftkanäle im Bereich des Schweißwulstes des Schienenfußes.

Ein weiterer vorteilhafter Parameter, der im Sinne der eingangs dargelegten Aufgabenstellung zur Problemlösung beizutragen vermag, ist die Bemessung der Schweißfuge entsprechend den Merkmalen des Anspruchs 11.

Die erfindungsgemäßen Parameter gelten unabhängig davon, ob die Gießform nach Art eines steigenden oder eines fallenden Gusses ausgebildet ist. In jedem Fall wird neben einer Vergleichmäßigung der Abkühlverhältnisse und einer Verminderung der Eigenspannungen insbesondere auch dahingehend auf die Abkühlverhältnisse eingewirkt, daß eine in den Randbereichen des Schienenprofils beginnende Erstarrung wirksam unterbunden wird.

Die Erfindung wird im folgenden unter Bezugnahme auf das in den Zeichnungen anhand einer geschweißten Schienenverbindung erläuterte Ausführungsbeispiel näher erläutert werden. Es zeigen:
Fig. 1 eine Stimansicht einer durch Zwischengußverschweißung hergestellten Schienenverbindung;
Fig. 2 einen teilweisen Horizontalschnitt im Verbindungsbereich entsprechend einer Ebene II-II der Fig. 1.

Nachdem das Wesensmerkmal der erfindungsgemäßen Maßnahmen zur Vergleichmäßigung des Erstarrungsprozesses in der Plazierung und Bemessung von Steigern und Luftkanälen der Gießform besteht, ist in den Zeichnungen auf eine explizite Darstellung der Gießform verzichtet worden.

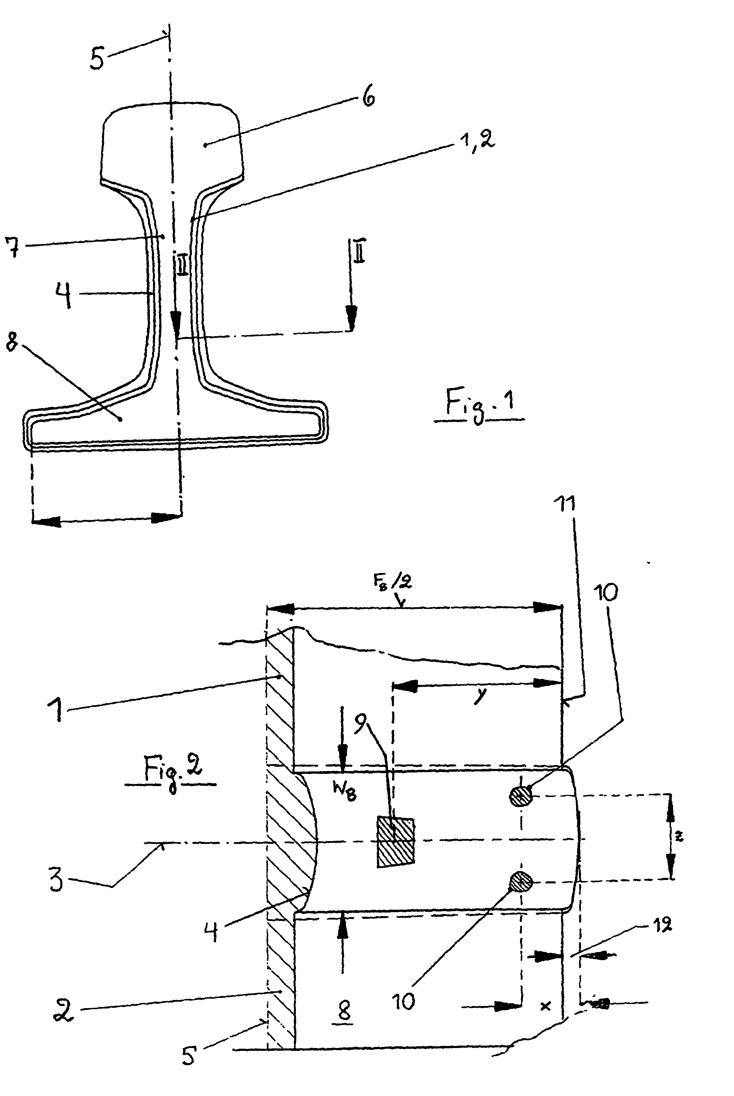

Die Fig. 1 und 2 zeigen eine aluminothermisch erzeugte Verbindung zwischen zwei Schienenenden 1, 2, deren Verbindungsbereich durch eine Quermittelebene 3 gekennzeichnet ist. Diese Quermittelebene 3 bildet zugleich die Symmetrieebene für die zeichnerisch nicht wiedergegebene Schweißfuge.

Ebenfalls symmetrisch bezüglich der Quermittelebene 3 erstreckt sich ein Schweißwulst 4, der die Schweißfuge beiderseits überdeckt.

Das Schienenprofil weist einen bezüglich einer vertikalen Längsmittelebene 5 symmetrischen Aufbau auf und besteht aus einem Schienenkopf 6, einem Schienensteg 7 und einem Schienenfuß 8. Der Schweißwulst 4 bleibt im Bereich des Schienensteges 7 sowie des Schienenfußes 8 bestehen und es wird nach erfolgter Schweißung lediglich der Schienenkopf im Bereich seiner Funktionsflächen zerspanend bearbeitet, um das hier standardisierte Profil bereitzustellen.

Die Gestalt des Schienenwulstes ist durch die Geometrie des Gießraumes bedingt und es ist die Gießform mit Steigern 9 sowie Luftkanälen 10 versehen, welche jeweils durch die Lage ihrer Durchstoßflächen relativ zu dem Wulst 4 wiedergegeben sind. Der Steiger 9 weist eine Querschnittsfläche A auf, die nach Maßgabe der eingangs dargelegten Bedingungen bemessen ist, die somit durch die Funktion als Steiger bzw. als Speiser weitestgehend festgelegt ist. Die Querschnittsflächen erstrecken sich in jedem Fall symmetrisch bezüglich der Quermittelebene 3. Symmetrie ist darüber hinaus bezüglich der Längsmittelebene 5 gegeben, so daß eine Betrachtung lediglich der in Fig. 2 gezeigten hälftigen Darstellung ausreichend ist.

Der Steiger 9 weist in der gezeigten Darstellung einen trapezartigen Querschnitt auf - dies ist jedoch nicht zwingend - und es sind gleichermaßen auch sonstige Querschnittsformen möglich. Wesentlich ist, daß der Flächenschwerpunkt der Steiger 9 - auf einer Seite der Längsmittelebene 5 - einen Abstand y von der äußeren Seitenkante 11 des Schienenfußes 8 aufweist.

Mit W_{B} ist die Breite des Wulstes 4 - parallel zu der Längsmittelebene 5 in der Zeichnungsebene der Fig. 2 bezeichnet. Das Maß 12 hingegen bezeichnet die durchschnittliche Dicke der Wulst, ausgehend von der genannten Seitenkante 11.

Schließlich ist mit F_{B/2} die halbe Breite des Schienenfußes 8 bezeichnet, und zwar das Maß zwischen der Seitenkante 11 und der Längsmittelebene 5.

Das Ausführungsbeispiel zeigt zwei Luftkanäle 10, die jeweils eine Querschnittsfläche B aufweisen und die symmetrisch beiderseits der Quermittelebene 3 angeordnet sind. Die Luftkanäle weisen einen Mittenabstand z voneinander auf. Die Zeichnungsfigur 2 zeigt für die Luftkanäle 10 eine kreisförmige Querschnittsform - dies ist jedoch nicht zwingend.

Erfindungsgemäß erfolgt die Plazierung des Steigers sowie der Luftkanäle in Abhängigkeit von den Parametern F_{B} und W_{B} des Schienenprofils, wobei darüber hinaus die Bemessung des Querschnitts eines Luftkanals in Abhängigkeit von dem Querschnitt eines Steigers 9 erfolgt.

Mit der Anordnung der Steiger 9 sowie der Luftkanäle 10 in Abhängigkeit von den genannten Parametern des Schienenprofils wird während des Gießens sowie des sich anschließenden Erstarrungsprozesses eine solche Temperaturverteilung innerhalb der Wandungen der Gießform erzielt, welche den Erstarrungsprozeß im Bereich der Schweißfuge verlangsamt und welche gleichzeitig eine Vergleichmäßigung der Erstarrungsbedingungen - über das Volumen des im Ausgangszustand schmelzflüssigen Schweißguts gesehen - mit sich bringt. Insbesondere wird auf diesem Wege erreicht, daß sich keine Zonen sich ausbilden können, bei denen sich außenseitig geringere Temperaturen als in zentraler gelegenen Bereichen einstellen. Durch die Bemessung und Plazierung der Steiger 9 sowie der Luftkanäle 10 wird insoweit eine Wärmespeicherfunktion ausgeübt. Aus dem Zusammenwirken eines Wärmeabflusses über die Stirnseiten der verbundenen Schienenenden und dem gesteuerten Wärmeabfluß über die Wandungen der Gießform ergibt sich ein definierter und insbesondere vergleichmäßigter, verlangsamter Ablauf des Erstarrungsprozesses, der zur Ausbildung einer zumindest eigenspannungsarmen Schweißverbindung führt.

## Patentansprüche

1. Verfahren zur Herstellung einer Gießform für die Zwischengussverschweißung zweier Schienenenden (1,2), bestehend aus an das Schienenprofil angepassten, die Schweißfuge zwischen den Schienenenden überdeckenden, aus einem feuerfesten Werkstoff bestehenden Formwandungen, wobei der Gießraum im Übrigen durch die Stirnseiten der Schienenenden (1,2) begrenzt ist, wobei in die Formwandungen ein System von Steigern (9) mit der jeweiligen Querschnittsfläche A und Luftkanälen (10) mit der jeweiligen Querschnittsfläche B eingearbeitet ist, wobei sich die Steiger (9), die Luftkanäle (10), die Schweißfuge und der eine Breite W_{B} aufweisende Schweißwulst (4) symmetrisch bezüglich einer vertikalen Quermittelebene (3) erstrecken und wobei die Steiger (9) und die Luftkanäle (10) symmetrisch bezüglich einer vertikalen Längsmittelebene (5) der Schienenenden (1,2) angeordnet sind,
**dadurch gekennzeichnet,**
- **dass** der auf einer Seite der Längsmittelebene (5) gelegene Flächenschwerpunkt der Querschnittsfläche A des wenigstens einen Steigers (9), als Durchstoßfläche der Gießform in einer horizontalen Ebene im Bereich des Schweißwulstes des Schienenfußes (8) gesehen, in einem solchen Abstand y von der Seitenkante (11) des Schienenfußes (8) angeordnet wird, der in Abhängigkeit von der Breite F_{B} des Schienenfußes (8) festgelegt ist,
- **dass** die auf einer Seite der Längsmittelebene (5) gelegene Querschnittsfläche B des wenigstens einen Luftkanals (10) in Abhängigkeit von der Querschnittsfläche A des Steigers (9) gewählt wird,
- wobei der Wert y in einem Bereich von 0,0025 F_{B} bis 0,4000 F_{B} liegt,
- wobei der Wert B/2 in einem Bereich von 0,05 A bis 20,00 A liegt,
- **dass** der Flächenschwerpunkt der Querschnittsfläche B der gesamten Querschnittsflächen B der Luftkanäle (10) als Durchstoßfläche der Gießform in einer Horizontalebene im Bereich des Schweißwulstes des Schienenfußes (8) gesehen, in einem solchen Abstand x von dem in der Ebene des Schienenfußes (8) gesehenen Scheitelpunkt des Schweißwulstes (4) angeordnet wird, der in Abhängigkeit von der Breite F_{B} des Schienenfußes (8) festgelegt ist,
- wobei der Wert x in einem Bereich von 0,025 F_{B} bis 0,350 F_{B} liegt und
- **dass** jeweils wenigsten ein Luftkanal (10) beiderseits der Quermittelebene (3) angeordnet wird.

2. Verfahren nach Anspruch 1,
**dadurch gekennzeichnet,**
- **dass** wenigstens zwei Luftkanäle (10) - in einer Richtung parallel zu der Längsmittelebene (5) gesehen - nach Maßgabe eines solchen Abstands z angeordnet werden, der in Abhängigkeit von der Breite W_{B} des Schweißwulstes (4) festgelegt ist,
- wobei der Wert z in einem Bereich von 0,25 W_{B} bis 0,95 W_{B} liegt.

3. Verfahren nach Anspruch 1 oder 2,
**dadurch gekennzeichnet,**
- **dass** der Wert y in einem Bereich von 0,010 F_{B} bis 0,325 F_{B} liegt.

4. Verfahren nach einem der vorangegangenen Ansprüche 1 bis 3,
**dadurch gekennzeichnet,**
- **dass** der Wert B/2 in einem Bereich von 0,05 A bis 0,75 A liegt.

5. Verfahren nach einem der Ansprüche 3 oder 4,
**dadurch gekennzeichnet,**
- **dass** der Wert y in einem Bereich von 0,05 F_{B} bis 0,25 F_{B} liegt.

6. Verfahren nach einem der vorangegangenen Ansprüche 1 bis 5,
**dadurch gekennzeichnet,**
- **dass** der Wert x in einem Bereich von 0,05 F_{B} bis 0,20 F_{B} liegt.

7. Verfahren nach einem der vorangegangenen Ansprüche 2 bis 6,
**dadurch gekennzeichnet,**
- **dass** der Wert z in dem Bereich von 0,4 W_{B} bis 0,8 W_{B} liegt.

8. Verfahren nach einem der vorangegangenen Ansprüche 5 bis 7,
**dadurch gekennzeichnet,**
- **dass** der Wert y in einem Bereich von 0,075 F_{B} bis 0,200 F_{B} liegt.

9. Verfahren nach einem der vorangegangenen Ansprüche 6 bis 8,
**dadurch gekennzeichnet, dass** der Wert x in einem Bereich von 0,075 F_{B} bis 0,150 F_{B} liegt.

10. Verfahren nach einem der vorangegangenen Ansprüche 7 bis 9,
**dadurch gekennzeichnet,**
- **dass** der Wert z in einem Bereich von 0,55 W_{B} bis 0,70 W_{B} liegt.

11. Verfahren nach einem de vorangegangenen Ansprüche 1 bis 10,
**dadurch gekennzeichnet,**
- **dass** der stimseitige Abstand der Schienenenden (1,2), die Schweißfuge, in einem Bereich von 25 mm bis 40 mm bemessen wird.

## Claims

1. Method for producing a casting mould for the intermediate cast welding of two rail ends (1, 2), consisting of mould walls which are matched to the rail profile, which cover the welded joint between the rail ends and which consist of a refractory material, wherein the casting chamber is also bounded by the end faces of the rail ends (1,2), wherein a system of risers (9) having the respective cross-sectional area A, and air channels (10) having the respective cross-sectional area B is incorporated into the mould walls, wherein the risers (9), the air channels (10), the welded joint and the weld bead (4), which has a width W_{B}, extend symmetrically with respect to a vertical transverse centre plane (3) and wherein the risers (9) and the air channels (10) are disposed symmetrically with respect to a vertical longitudinal centre plane (5) of the rail ends (1, 2),
**characterised in that**
- when seen as an intersection surface of the casting mould in a horizontal plane in the region of the weld bead of the rail foot (8), the centroid of the cross-sectional area A of the at least one riser (9), which centroid is on one side of the longitudinal centre plane (5), is arranged at a distance y from the side edge (11) of the rail foot (8), which distance y is defined as a function of the width F_{B} of the rail foot (8),
- the cross-sectional area B, which is located on one side of the longitudinal centre plane (5), of the at least one air channel (10) is selected as a function of the cross-sectional area A of the riser (9),
- the value y being in a range from 0.0025 F_{B} to 0.4000 F_{B},
- the value B/2 being in a range from 0.05 A to 20.00 A,
- when seen as an intersection surface of the casting mould in a horizontal plane in the region of the weld bead of the rail foot (8), the centroid of the cross-sectional area B of all the cross-sectional areas B of the air channels (10) is arranged at a distance x from the apex of the weld bead (4) as seen in the plane of the rail foot (8), which distance x is defined as a function of the width F_{B} of the rail foot (8),
- the value x being in a range from 0.025 F_{B} to 0.350 F_{B}, and
- at least one air channel (10) is in each case arranged on both sides of the transverse centre plane (3).

2. Method as claimed in claim 1,
**characterised in that**
- at least two air channels (10) - seen in a direction parallel to the longitudinal centre plane (5) - are arranged spaced by a distance z which is defined as a function of the width W_{B} of the weld bead (4),
- the value z being in a range from 0.25 W_{B} to 0.95 W_{B}.

3. Method as claimed in claim 1 or 2,
**characterised in that**
- the value y is in a range from 0.010 F_{B} to 0.325 F_{B}.

4. Method as claimed in any one of the preceding claims 1 to 3,
**characterised in that**
- the value B/2 is in a range from 0.05 A to 0.75 A.

5. Method as claimed in one of claims 3 or 4,
**characterised in that**
- the value y is in a range from 0.05 F_{B} to 0.25 F_{B}.

6. Method as claimed in any one of the preceding claims 1 to 5,
**characterised in that**
- the value x is in a range from 0.05 F_{B} to 0.20 F_{B}.

7. Method as claimed in any one of the preceding claims 2 to 6,
**characterised in that**
- the value z is in the range from 0.4 W_{B} to 0.8 W_{B}.

8. Method as claimed in any one of the preceding claims 5 to 7,
**characterised in that**
- the value y is in a range from 0.075 F_{B} to 0.200 F_{B}.

9. Method as claimed in any one of the preceding claims 6 to 8,
**characterised in that** the value x is in a range from 0.075 F_{B} to 0.150 F_{B}.

10. Method as claimed in any one of the preceding claims 7 to 9,
**characterised in that**
- the value z is in a range from 0.55 W_{B} to 0.70 W_{B}.

11. Method as claimed in any one of the preceding claims 1 to 10,
**characterised in that**
- the distance between the end faces of the rail ends (1, 2), the welded joint, is dimensioned to be in a range from 25 mm to 40 mm.

## Revendications

1. Procédé pour la fabrication d'un moule de coulée pour le soudage par coulée intermédiaire de deux extrémités de rail (1, 2) composé de parois de moule en matériau réfractaire adaptées au profil des rails et recouvrant le joint à souder formé entre les extrémités de rail, l'espace de coulée à remplir avec la coulée intermédiaire étant également délimité par les faces des extrémités de rail (1, 2), et un système de tuyaux de montée (9) ayant une aire de section A et d'évents (10) ayant une aire de section B étant formé dans les parois du moule, les tuyaux de montée (9), les évents (10), le joint à souder et un bourrelet de soudure (4) présentant une largeur W_{B} étant symétriques par rapport à un plan transversal médian vertical (3), et les tuyaux de montée (9) et les évents (10) étant symétriques par rapport à un plan longitudinal médian (5) des extrémités de rail (1, 2), **caractérisé en ce que** :
le barycentre de surface de l'aire de section A du tuyau de montée (9) au nombre d'un au moins situé sur un côté du plan longitudinal médian (5), vu comme une surface de percée du moule de coulée dans un plan horizontal situé au niveau du bourrelet de soudure du pied de rail (8), est disposé à une distance y par rapport à l'arête latérale (11) du pied de rail (8) qui est déterminée en fonction de la largeur F_{B} du pied de rail (8),
**en ce que** l'aire de surface B du canal à air (10) au nombre d'un au moins située sur un côté du plan longitudinal médian (5) est choisie en fonction de l'aire de surface A du tuyau de montée (9),
la valeur de y étant comprise entre 0,0025 F_{B} et 0,4000 F_{B},
la valeur de B/2 étant comprise entre 0,05 A et 20,00 A,
**en ce que** le barycentre de l'aire de surface B pour toutes les aires de surface B des évents (10), vu comme une surface de percée du moule de coulée dans un plan horizontal situé au niveau du bourrelet de soudure du pied de rail (8), est disposé à une distance x du sommet du bourrelet de soudure (4) vu dans le plan du pied de rail (8) qui est déterminée en fonction de la largeur F_{B} du pied de rail (8),
la valeur de x étant comprise entre 0,025 F_{B} et 0,350 F_{B} et
**en ce qu'**un évent (10) au moins est disposé de chaque côté du plan transversal médian (3).

2. Procédé selon la revendication 1, **caractérisé en ce que** deux évents (10) au moins, vus dans une direction parallèle au plan longitudinal médian (5), sont disposés à une distance z déterminée en fonction de la largeur W_{B} du bourrelet de soudure (4), la valeur de z étant comprise entre 0,25 W_{B} et 0,95 W_{B}.

3. Procédé selon la revendication 1 ou 2, **caractérisé en ce que** la valeur de y est comprise entre 0,010 F_{B} et 0,325 F_{B}.

4. Procédé selon l'une des revendications 1 à 3, **caractérisé en ce que** la valeur de B/2 est comprise entre 0,05 A et 0,75 A.

5. Procédé selon l'une quelconque des revendications 3 ou 4, **caractérisé en ce que** la valeur de y est comprise entre 0,05 F_{B} et 0,25 F_{B}.

6. Procédé selon l'une des revendications 1 à 5, **caractérisé en ce que** la valeur de x est comprise entre 0,05 F_{B} et 0,20 F_{B}.

7. Procédé selon l'une des revendications 2 à 6, **caractérisé en ce que** la valeur de z est comprise entre 0,4 W_{B} et 0,8 W_{B}.

8. Procédé selon l'une des revendications 5 à 7, **caractérisé en ce que** la valeur de y est comprise entre 0,075 F_{B} et 0,200 F_{B}.

9. Procédé selon l'une des revendications 6 à 8, **caractérisé en ce que** la valeur de x est comprise entre 0,075 F_{B} et 0,150 F_{B}.

10. Procédé selon l'une des revendications 7 à 9, **caractérisé en ce que** la valeur de z est comprise entre 0,55 W_{B} et 0,70 W_{B}.

11. Procédé selon l'une des revendications 1 à 10, **caractérisé en ce que** l'écartement frontal entre les extrémités de rail (1, 2), autrement dit le joint à souder, est compris entre 25 mm et 40 mm.
